Europäisches Patentamt

European Patent Office

Office européen des brevets

(11) Numéro de publication: **0 425 382 A1**

# (12) DEMANDE DE BREVET EUROPEEN

(21) Numéro de dépôt: 90403011.1

(22) Date de dépôt: 25.10.90

(51) Int. Cl.⁵: **G01S 13/82**, G06K 7/10

(30) Priorité: 26.10.89 FR 8914048

(43) Date de publication de la demande:
02.05.91 Bulletin 91/18

(84) Etats contractants désignés:
BE ES IT NL

(71) Demandeur: SOCIETE DE FABRICATION
D'INSTRUMENTS DE MESURE (S.F.I.M.)
13, avenue Marcel Ramolfo-Garnier
F-91344 Massy Cédex(FR)

(72) Inventeur: Preti, Jean-Claude
8, rue Chemin de la Marinière
F-91370 Verrières le Buisson(FR)
Inventeur: Léger, Richard
43, rue du Long Foin
F-91700 Ste Geneviève des Bois(FR)

(74) Mandataire: Schrimpf, Robert et al
Cabinet Regimbeau 26, Avenue Kléber
F-75116 Paris(FR)

(54) **Système de liaison hertzienne bidirectionnelle alternée à modulation de sous-porteuse.**

(57) L'invention concerne un système de liaison hertzienne bidirectionnelle alternée à modulation de sous-porteuse.

Le système comporte des premiers moyens émetteurs-récepteurs 1 et des deuxièmes moyens émetteurs-récepteurs 2. Pour la transmission de messages, les moyens émetteurs-récepteurs 1 émettent une onde hyperfréquence continue vers les moyens émetteurs-recepteurs 2, lesquels réfléchissent l'onde électromagnétique précitée vers les moyens émetteurs-récepteurs 1 en effectuant une modulation de sous-porteuse à fréquence intermédiaire au moyen d'un modulateur 52110, 5211. La détection du système d'onde stationnaire créée du fait de l'émission de l'onde électromagnétique et de la réflexion de celle-ci vers les moyens émetteurs-récepteurs 1 est effectuée au moyen de deux diodes de détection 5161, 5162 décalées d'un multiple impair de quarts de longueur d'onde dans la direction de propagation de l'onde électromagnétique dans le guide d'onde d'alimentation de l'antenne 515 des premiers moyens émetteurs-récepteurs 1. Un traitement logique 514 permet de restituer le signal de modulation binaire constitutif du message transmis par les moyens émetteurs-récepteurs 2.

Application à l'échange de messages bidirectionnels entre un ou plusieurs véhicules et un point fixe ou lui-même mobile.

FIG.1

La présente invention concerne un système de liaison hertzienne bidirectionnelle alternée comportant des premiers et deuxièmes moyens émetteurs-récepteurs assurant la liaison bidirectionnelle par la transmission d'un signal électromagnétique.

On connaît de la demande de brevet français n° 87 17219 au nom de la Demanderesse un système de liaison hertzienne bidirectionnelle alternée conforme au préambule dans lequel les premiers moyens émetteurs-récepteurs comprennent des moyens d'émission vers les deuxièmes moyens émetteurs-récepteurs d'une onde électromagnétique continue, des moyens de modulation d'amplitude de l'onde électromagnétique continue, des moyens de contrôle et de commande des moyens de modulation et des moyens récepteurs du signal électromagnétique transmis par les deuxièmes moyens émetteurs-récepteurs. Les deuxièmes moyens émetteurs-récepteurs comportent des moyens récepteurs de l'onde électromagnétique continue émise par les premiers moyens émetteurs-récepteurs, des moyens réflecteurs de l'onde électromagnétique continue émise par les premiers moyens émetteurs-récepteurs pour engendrer une onde électromagnétique réfléchie, des moyens de modulation d'amplitude de l'onde électromagnétique continue réfléchie pour engendrer le signal électromagnétique transmis par les deuxièmes moyens émetteurs-récepteurs et des moyens de contrôle et de commande des moyens de modulation et des moyens récepteurs.

Dans le but d'assurer une meilleure détection des signaux électromagnétiques transmis, dans le dispositif précité il peut être prévu au niveau des moyens réflecteurs des deuxièmes moyens émetteurs-récepteurs un système de déplacement du plan de court-circuit dans le guide d'onde d'alimentation de l'antenne, ce déplacement permettant d'assurer un déplacement correspondant des maxima et minima de tension des ondes stationnaires engendrées par l'émission des ondes électromagnétiques et leur réflexion entre les premiers et deuxièmes moyens émetteurs-récepteurs et une correction du niveau d'amplitude du signal détecté.

Ce système de correction, bien que satisfaisant au cours d'expérimentations, s'est révélé sensible à l'environnement des premiers et deuxièmes moyens émetteurs-récepteurs. En particulier, lors de l'utilisation de ces systèmes de liaison hertzienne bidirectionnelle avec des véhicules automobiles, ainsi que décrit dans la demande de brevet français n° 87 17219, laquelle est incorporée par référence à la présente demande, les deuxièmes moyens d'émission-réception, constituant en fait un transporteur très perfectionné, sont supportés par l'infrastructure du véhicule. Celle-ci est alors susceptible de provoquer par réflexion de l'onde électromagnétique émise par les premiers moyens émetteurs-récepteurs un éblouissement de ces derniers, ce qui, dans la plupart des cas, provoque un mauvais fonctionnement de l'ensemble du système.

La présente invention a pour but de remédier à l'inconvénient précité susceptible d'apparaître dans l'application considérée.

Conformément à l'objet de la présente invention, le système de correction précité est supprimé et les moyens de modulation d'amplitude des deuxièmes moyens émetteurs-récepteurs sont munis de moyens générateurs d'une onde sous-porteuse à fréquence intermédiaire, l'onde sous-porteuse étant transmise comme signal de modulation du signal électromagnétique transmis par les deuxièmes moyens émetteurs-récepteurs vers les premiers moyens émetteurs-récepteurs pendant les valeurs des bits constituant les messages de liaison, les valeurs zéro ou un des bits précités correspondant à une absence de signal électromagnétique transmis et de sous-porteuse. Les premiers moyens émetteurs-récepteurs comprennent alors des moyens récepteurs comportant, d'une part, des moyens de détection des ondes stationnaires engendrées par l'émission de l'onde électromagnétique continue et par la réception du signal électromagnétique transmis par les deuxièmes moyens émetteurs-récepteurs, ces moyens de détection délivrant un signal détecté et, d'autre part, des moyens démodulateurs du signal détecté pour restituer le signal de modulation de l'onde électromagnétique réfléchie pour engendrer le signal électromagnétique transmis par les deuxièmes moyens émetteurs-récepteurs vers les premiers moyens émetteurs-récepteurs.

Le système selon l'invention est alors utilisable pour la liaison hertzienne bidirectionnelle de véhicules automobiles, quelle que soit l'importance de l'infrastructure de ces derniers.

Une description plus détaillée d'un mode de réalisation particulièrement avantageux du système objet de l'invention sera donnée ci-après en liaison avec les figures annexées dans lesquelles :

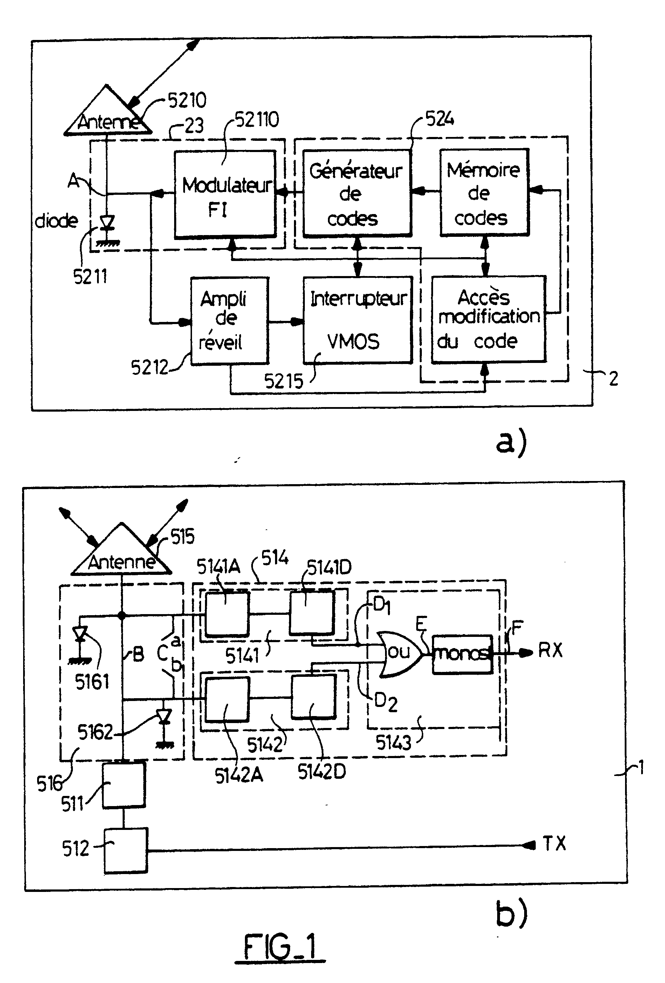

. la figure 1 représente en ses parties a) et b) un schéma synoptique des deuxièmes moyens émetteurs-récepteurs et des premiers moyens émetteurs-récepteurs,

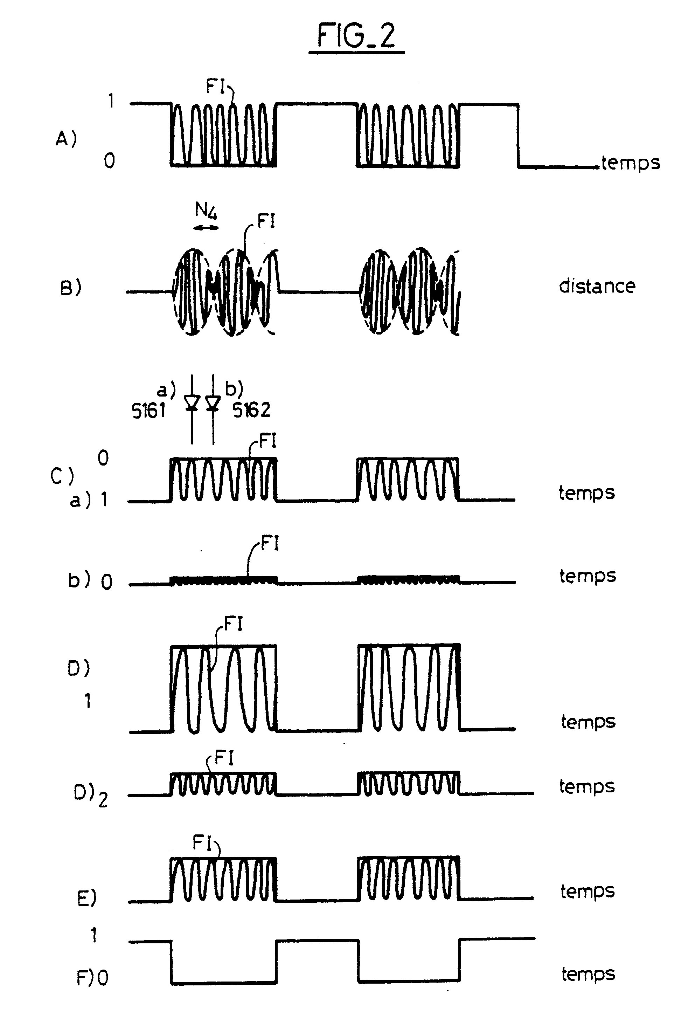

. la figure 2 en ses parties A à E représente des chronogrammes de signaux aux points de test A à E correspondants de la figure 1, relativement aux premiers et deuxièmes moyens émetteurs-récepteurs,

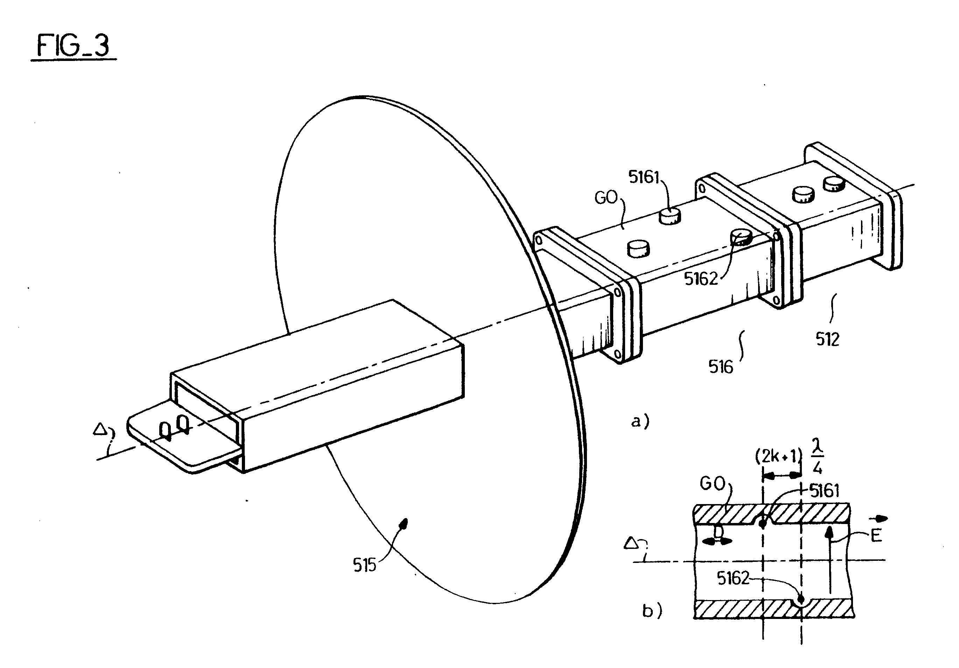

. la figure 3 représente en sa partie a) une vue en perspective de la partie hyperfréquence des premiers moyens émetteurs-récepteurs 1, et en sa partie b) une vue en coupe selon un plan de symétrie longitudinal contenant l'axe longitudinal du guide d'onde d'alimentation de l'antenne des moyens émetteurs-récepteurs 1.

Une description très détaillée du système objet de l'invention sera donnée en liaison avec la figure 1 en ses parties a) et b).

Sur l'ensemble des figures, des références identiques à celles utilisées dans la demande de brevet français n° 87 17219 désignent les mêmes éléments.

Selon la figure 1 au point a) de celle-ci, les moyens de modulation d'amplitude 23 des deuxièmes moyens émetteurs-récepteurs 2 comportent des moyens générateurs d'une onde sous-porteuse à fréquence intermédiaire FI. Les moyens générateurs de l'onde sous-porteuse à fréquence intermédiaire peuvent consister, ainsi que représenté sur la figure précitée, en un modulateur 52110 et une diode 5211, la diode 5211 étant par exemple connectée en parallèle au guide d'onde d'alimentation de l'antenne 5210 des deuxièmes moyens émetteurs-récepteurs 2. Selon un aspect avantageux du système objet de l'invention, l'onde sous-porteuse peut être émise par le modulateur 52110 à une fréquence de quelques centaines de kHz et, de préférence, égale à 400 kHz. L'onde sous-porteuse est transmise comme signal de modulation de l'onde électromagnétique transmise par les deuxièmes moyens émetteurs-récepteurs 2 vers les premiers moyens émetteurs-récepteurs 1. De préférence, et ainsi qu'il sera décrit en détail ultérieurement dans la description, les messages de liaison entre les moyens émetteurs-recepteurs 1 et les moyens émetteurs-récepteurs 2 sont des messages binaires, l'onde sous-porteuse étant transmise en salve avec l'onde porteuse pendant les valeurs des bits des messages de liaison précités, les valeurs zéro ou un des bits de ces mêmes messages correspondant par exemple à une absence d'onde électromagnétique transmise et de sous-porteuse. En outre, et de façon analogue au système et aux deuxième moyens émetteurs-récepteurs décrits dans la demande de brevet français n° 87 17219A, ces derniers comportent un amplificateur 5212 dont la fonction est analogue à l'amplificateur 212 décrit dans la demande de brevet français précitée, ainsi que des moyens de contrôle et de commande 524 dont la fonction est analogue aux moyens de contrôle et de commande 24 des deuxièmes moyens émetteurs-récepteurs 2 décrits dans la demande de brevet français n° 87 17219. On indiquera simplement pour mémoire que les moyens de contrôle et de commande 524 peuvent consister en un système d'accès de modification du code transmis, un système de mémorisation de codes et un système générateur de codes. En outre, un interrupteur de type VMOS 5215 est commandé par le système amplificateur 5212, l'interrupteur précité permettant la commande du générateur de codes et finalement du modulateur 52110 par exemple. Le fonctionnement des deuxièmes moyens émetteurs-récepteurs 2 ne sera pas décrit plus en détail en ce qui concerne le processus de génération des codes et donc des messages de liaison car ce processus est semblable au mode de fonctionnement déjà décrit dans la demande de brevet français n° 87 17219 pour les mêmes ensembles.

Conformément à l'objet de l'invention, ainsi qu'on l'a représenté en partie b) de la figure 1, les moyens récepteurs des premiers moyens émetteurs-récepteurs 1 comportent avantageusement des moyens 516 de détection des ondes stationnaires engendrées par l'émission de l'onde électromagnétique continue et par la réception du signal électroma gnétique transmis par les deuxièmes moyens émetteurs-récepteurs 2. Bien entendu, ces ondes stationnaires sont engendrées entre l'antenne d'émission-réception 515 des premiers moyens émetteurs-récepteurs 1 et l'antenne d'émission-réception 5210 des deuxièmes moyens émetteurs-récepteurs 2. Les moyens de détection 516 délivrent un signal détecté.

En outre, les premiers moyens émetteurs-récepteurs 1 comportent des moyens 514 démodulateurs du signal détecté pour restituer le signal de modulation de l'onde électromagnétique réfléchie pour engendrer le signal électromagnétique transmis par les deuxièmes moyens émetteurs-récepteurs vers les premiers moyens émetteurs-récepteurs 1.

De préférence, ainsi qu'on l'a représenté de manière avantageuse en partie b) de la figure 1, les moyens 516 de détection des ondes stationnaires précitées comportent deux diodes de détection 5161 et 5162, ces diodes étant disposées dans le guide d'onde d'alimentation de l'antenne d'émission-réception 515 des premiers moyens émetteurs-récepteurs. Ces diodes sont disposées de préférence orthogonalement à la direction de polarisation du champ électrique de l'onde électromagnétique et sont distantes, selon la direction de propagation de l'onde électromagnétique précitée, d'un multiple impair de quarts d'onde de l'onde électromagnétique se propageant dans le guide d'onde précité.

Ainsi qu'on l'a représenté en outre en figure 1 en partie b) de celle-ci, les moyens 514 démodulateurs du signal détecté comportent pour chaque diode de détection 5161, 5162 des moyens amplificateurs 5141A et 5152A, lesquels permettent d'amplifier le signal détecté et délivrent un signal détecté amplifié. Les moyens démodulateurs 514 comportent en outre des moyens déclencheurs 5141D respectivement 5142D, ces moyens déclencheurs à seuil permettant d'effectuer une mise en forme du signal détecté amplifié. Ainsi qu'on l'a noté sur la figure 1 au point b) de celle-ci, un amplificateur et un déclencheur à seuil, associés à chaque diode, forment une première et deuxième voie de détection respectivement 5141 et 5142. Chaque voie de détection délivre un signal logique de détection.

En outre, ainsi qu'on la représenté également en figure 1 au point b), les moyens démodulateurs 514 du signal détecté comportent un circuit 5143 de traitement d'élimination de la sous-porteuse et de restitution du signal de modulation de l'onde électromagnétique réfléchie pour engendrer le signal électromagnétique transmis par les deuxièmes moyens émetteurs-récepteurs 2 vers les premiers moyens émetteurs-récepteurs 1.

Le circuit 5143 de traitement précédemment mentionné comporte, dans un mode de réalisation avantageux, une porte logique de type OU recevant sur une première respectivement deuxième entrée le signal logique de détection délivré par la première respectivement deuxième voie de détection 5141, 5142. La porte logique OU délivre un signal logique de détection résultant. Le circuit 5143 de traitement comporte également un circuit de type monostable recevant le signal logique de détection résultant. La durée de l'état métastable du circuit monostable précité est très supérieure à la durée de la période de la sous-porteuse. Le circuit monostable précité permet ainsi d'effectuer une recopie du signal de modulation de l'onde électromagnétique réfléchie pour engendrer le signal électromagnétique transmis par les deuxièmes moyens émetteurs-récepteurs 2.

On comprendra bien entendu que le fonctionnement à l'émission des premiers moyens émetteurs-récepteurs 1 vers les deuxièmes moyens émetteurs-récepteurs 2 est sensiblement analogue au mode de fonctionnement à l'émission du système décrit dans la demande de brevet français n° 87 17219. Il en est de même en ce qui concerne le fonctionnement à la réception de l'onde électromagnétique précitée par les deuxièmes moyens émetteurs-récepteurs et, en particulier, de l'amplificateur de veille 5512 et des circuits de contrôle et de commande 524 permettant d'engendrer le message ou code considéré.

Par contre, le fonctionnement à l'émission du message engendré par les deuxièmes moyens émetteurs-récepteurs 2 et le fonctionnement à la réception de ces mêmes messages par les premiers moyens émetteurs-récepteurs 1 dans leur configuration telle que représentée en figure 1 au point a) et b) de celle-ci seront décrits en détail en liaison avec la figure 2.

Sur la figure 2 précitée, au point A de celle-ci, on a représenté le signal d'émission présent au point de test A de la figure 1 en la partie a). A titre d'exemple non limitatif, lors d'un bit d'un message binaire transmis de valeur égale à 1, aucune onde hyperfréquence ni aucune onde sous-porteuse n'est émise, l'onde incidente étant simplement réfléchie par l'antenne d'émission-réception 5210. Au contraire, lors de l'existence d'un bit de valeur zéro, le modulateur à fréquence intermédiaire 5210 est activé et une onde de modulation à fréquence intermédiaire FI est engendrée, laquelle module alors l'onde électromagnétique réfléchie par l'antenne d'émission 5210 et constitue avec celle-ci le signal électromagnétique transmis par les deuxièmes moyens émetteurs-récepteurs. On notera cependant que pour des raisons de clarté sur la figure 2 on n'a pas représenté l'onde électromagnétique réfléchie hyperfréquence, laquelle est cependant présente quelle que soit la valeur des bits zéro ou un du message transmis. Le signal électromagnétique représenté au point A de la figure 2 transmis vers les premiers moyens émetteurs-récepteurs 1 provoque alors dans l'espace situé entre les antennes d'émission-réception 5210 et 515 des deuxièmes moyens émetteurs-récepteurs 2 respectivement premiers moyens émetteurs-récepteurs 1 un système d'ondes stationnaires, lequel est représenté au point B de la figure 2. Ce système d'onde stationnaire est par exemple prélevé au point de test B de la figure 1 en la partie b) de celle-ci relative aux moyens émetteurs-récepteurs 1. On notera en particulier que, en ce qui concerne le point B de la figure 2, l'axe des abscisses est gradué en distance contrairement aux autres points A, C à F de cette même figure pour lesquels l'axe des abscisses est gradué en temps, l'axe des ordonnées de l'ensemble des chronogrammes étant gradué en amplitude. Cependant, pour des raisons de pure commodité, on a également représenté au point B de la figure 2 dans les systèmes de noeuds et de ventres des ondes stationnaires, le chronogramme en temps de la sous-porteuse à fréquence intermédiaire FI, étant entendu que cette représentation ne peut être cependant effectuée par rapport à l'axe des abscisses gradué en distance du point B de cette figure. De manière classique, la distance entre un noeud et un ventre du système d'ondes stationnaires est égale à un quart de la longueur d'onde de l'onde hyperfréquence se propageant dans le guide d'onde d'interconnexion de l'antenne d'émission-réception. Les signaux correspondants, prélevés sur les diodes 5161 respectivement 5162, sont représentés au point C de la figure 2 aux points a) et b) de celui-ci. En raison du décalage de la position des diodes précitées le long de la direction de propagation de l'onde électromagnétique dans le guide et du phénomène d'ondes stationnaires présent dans celui-ci, il existe toujours un maximum ou un minimum relatif de champ électrique sur chaque diode, en fonction de la position des diodes précitées par rapport à un noeud ou un ventre du système d'ondes stationnaires établi dans le guide. Les maximum et minimum relatifs sont représentés sur les points a) et b) et l'on comprendra bien entendu que, quel que soit le système d'ondes stationnaires établi, lequel dépend notamment de la distance entre les antennes d'émission-réception des premiers et des deuxièmes moyens émetteurs-récepteurs 1 et 2, les maximum et minimum relatifs précités présents sur l'une ou l'autre diode constituent en fait le signal de détection précédemment mentionné. On comprendra également que le signal à fréquence intermédiaire de la sous-porteuse présent au niveau d'une diode est légèrement déphasé par rapport au signal de la sous-porteuse présent au niveau de l'autre diode, mais ce déphasage n'intervient pas. Les signaux représentés au point de test C aux points a) et b) sont respectivement reçus par les amplificateurs 5141A et 5142A, lesquels délivrent des signaux amplifiés aux déclencheurs à seuil 5141D et 5142D, les déclencheurs à seuil précités permettant d'assurer une remise en forme de la modulation d'amplitude de la sous-porteuse, tel que représenté au point B de la figure 2 aux points 1) et 2) de celui-ci, ces points correspondant aux points de test D1 et D2 de la figure 1 partie b).

Le circuit de traitement 5143 pour l'élimination de la sous-porteuse reçoit alors les signaux représentés au point D en 1) et 2) de la figure 2 et la porte OU, quelle que soit l'amplitude relative des signaux représentés en D1 ou D2, délivre alors un signal logique de détection résultant représenté au point E de la figure 2, lequel correspond au point de test E de la figure 1 partie b) de celle-ci. Le monostable recevant le signal précité, en raison de la durée très supérieure de son état métastable à la durée de la période du signal à fréquence intermédiaire, est alors maintenu dans sa position pendant la présence du signal à fréquence intermédiaire FI, la répétition de l'état métastable du monostable précité permettant ainsi de recopier la valeur des bits du message transmis conformément au signal représenté au point A de la figure 2 et la valeur zéro ou un du bit suivant, en l'absence de sous-porteuse ou signal à fréquence intermédiaire FI. Le monostable précité permet ainsi de supprimer la sous-porteuse précitée en assurant une recopie de l'état binaire du signal de modulation constitutif du message transmis par les deuxièmes moyens émetteurs-récepteurs 2.

Sur la figure 1 en partie b) de celle-ci, on a représenté en outre par 511 une source hyperfréquence d'émission constituant source d'émission des moyens émetteurs constitutifs des premiers moyens émetteurs-récepteurs 1. De même, on a représenté par 512 un modulateur permettant de moduler en amplitude l'onde électromagnétique émise par les premiers moyens émetteurs-récepteurs 1.

De manière classique, l'émetteur comprenant la source 511 précitée des premiers moyens émetteurs-récepteurs 1 peut être constitué par une cavité résonante dont l'élément actif est par exemple une diode Gunn. La fréquence d'oscillation, ainsi que déjà mentionné dans la demande de brevet principal pour engendrer l'onde hyperfréquence d'émission, est de 9,9 GHz et la puissance rayonnée est inférieure à 10 mW.

En outre, les diodes de détection 5161 et 5162 peuvent être constituées par des diodes Schottky.

Une description plus détaillée de la partie hyperfréquence des premiers moyens émetteurs-récepteurs 1 sera donnée en liaison avec la figure 3.

Sur la figure précitée, on a représenté l'antenne d'émission-réception, celle-ci étant dans un mode de réalisation avantageux non limitatif constituée par un réflecteur de type parabolique et un guide d'onde alimentant un dipôle d'émission. L'alimentation de l'antenne 515 ainsi constituée est assurée par un guide d'onde GO de type rectangulaire, ainsi que représenté au point a) de la figure 3. Les diodes de détection 5161 et 5162 sont disposées, ainsi que représenté au point a) de la figure 3, au voisinage des parois du guide d'onde GO orthogonales au champ électrique de l'onde électromagnétique émise ou reçue. Sur le point b) de cette même figure 3, on a représenté en coupe le guide d'onde GO muni au voisinage des parois de celui-ci des diodes de détection 5161 et 5162. Les diodes sont orthogonales au champ électrique E et sont distantes selon la direction de propagation B de l'onde électromagnétique guidée d'un multiple impair de quarts de longueur d'onde de cette dernière. La disposition des diodes précitées au voisinage des parois du guide d'onde, les diodes étant d'autre part disposées de part et d'autre de l'axe longitudinal du guide d'onde précité, permet de ne pas affecter la configuration du système d'ondes stationnaires créé entre l'antenne d'émission-réception 515 des premiers moyens émetteurs-récepteurs et l'antenne d'émission-réception 5210 des deuxièmes moyens émetteurs-récepteurs 2. Tout en permettant cependant de maintenir l'une ou l'autre diode à un maximum relatif de tension ou de signal par rapport à l'autre, quelle que soit la distance des moyens émetteurs-récepteurs 1 par rapport aux moyens émetteurs-récepteurs 2 ou quelle que soit la variation de celle-ci.

On a ainsi décrit un système de liaison hertzienne bidirectionnelle alternée particulièrement performant susceptible d'être utilisé dans des conditions d'environnement délicates, en particulier pour assurer l'échange de messages entre un et plusieurs véhicules automobiles et un point lui-même fixe ou mobile. Bien entendu, les protocoles d'échange de messages précédemment décrits dans la demande de brevet français n° 87 17219 peuvent être utilisés pour la mise en oeuvre du système de la présente invention.

## Revendications

1. Système de liaison hertzienne bidirectionnelle alternée comportant des premiers (1) et deuxièmes (2) moyens émetteurs-récepteurs assurant la liaison bidirectionnelle par la transmission d'un signal électromagnétique,
- lesdits premiers moyens émetteurs-récepteurs (1) comprenant :
. des moyens d'émission (11) vers lesdits deuxièmes moyens émetteurs-récepteurs (2) d'une onde électromagnétique continue et,
. des moyens (12) de modulation d'amplitude de ladite onde électromagnétique continue,
. des moyens (13) de contrôle et de commande desdits moyens (12) de modulation d'amplitude,
. des moyens (14) récepteur du signal électromagnétique transmis par lesdits deuxièmes (2) moyens émetteurs-récepteurs,
- lesdits deuxièmes (2) moyens émetteurs-récepteurs comprenant :
. des moyens (21) récepteurs de l'onde électromagnétique continue ou modulée en amplitude émise par lesdits premiers (1) moyens émetteurs-récepteurs,
. des moyens (22) réflecteurs de ladite onde électromagnétique continue émise par lesdits premiers (1) moyens émetteurs-récepteurs, pour engendrer une onde électromagnétique continue réfléchie,
. des moyens (23) de modulation d'amplitude de ladite onde électromagnétique continue réfléchie pour engendrer ledit signal électromagnétique transmis par lesdits deuxièmes (2) moyens émetteurs-récepteurs vers lesdits premiers (1) moyens émetteurs-récepteurs,
. des moyens (24) de contrôle et de commande desdits moyens (23) de modulation d'amplitude et desdits moyens (21) récepteurs, caractérisé en ce que lesdits moyens (23) de modulation d'amplitude des deuxièmes (2) moyens émetteurs-récepteurs comportent des moyens générateurs d'une onde sous-porteuse à fréquence intermédiaire, ladite onde sous-porteuse étant transmise comme signal de modulation de l'onde électromagnétique transmise par les deuxièmes (2) moyens émetteurs-récepteurs vers les premiers moyens émetteurs-récepteurs pendant les valeurs des bits constituant les messages de liaison, les valeurs zéro ou un desdits bits correspondant à une absence d'onde électromagnétique transmise et de sous-porteuse, lesdits moyens récepteurs des premiers (1) moyens émetteurs-récepteurs comportant :

- des moyens (516) de détection des ondes stationnaires engendrées par l'émission de l'onde électromagnétique continue et par la réception du signal électromagnétique transmis par les deuxièmes (2) moyens émetteurs-récepteurs, lesdits moyens de détection délivrant un signal détecté,
- des moyens (514) démodulateurs dudit signal détecté pour restituer le signal de modulation de l'onde électromagnétique réfléchie pour engendrer ledit signal électromagnétique transmis par les deuxièmes (2) moyens émetteurs-récepteurs vers les premiers moyens émetteurs-récepteurs (1).

2. Système selon la revendication 1, caractérisé en ce que lesdits moyens (516) de détection des ondes stationnaires comportent : deux diodes de détection (5161, 5162) disposées dans le guide d'onde (90) d'alimentation de l'antenne d'émission-réception (515), lesdites diodes disposées orthogonalement à la direction de polarisation du champ électrique de ladite onde électromagnétique étant distantes, selon la direction de propagation de celle-ci, d'un multiple impair de quarts de longueur d'onde de ladite onde électromagnétique.

3. Système selon la revendication 2, caractérisé en ce que lesdites diodes de détection (5161, 5162) sont disposées au voisinage des parois du guide d'onde orthogonales au champ électrique de l'onde électromagnétique émise et/ou reçue.

4. Système selon la revendication 3, caractérisé en ce que lesdites diodes (5161, 5162) sont disposées de part et d'autre de l'axe longitudinal du guide d'onde d'alimentation de l'antenne d'émission-réception.

5. Système selon l'une des revendications 2 à 4, caractérisé en ce que lesdits moyens (514) démodulateurs dudit signal détecté comportent pour chaque diode de détection (5161, 5162) :
- des moyens amplificateurs (5141A, 5142A) permettant d'amplifier le signal détecté, et délivrant un signal détecté amplifié ;
- des moyens déclencheurs (5141D, 5142D) à seuil permettant d'effectuer une mise en forme du signal détecté amplifié, un amplificateur et un déclencheur à seuil associé à chaque diode formant une première et une deuxième voie de détection (5141, 5142), chaque vote de détection délivrant un signal logique de détection,
- un circuit (5143) de traitement d'élimination de la sous-porteuse et de restitution du signal de modulation de l'onde électromagnétique réfléchie pour engendrer le signal électromagnétique transmis par les deuxièmes (2) moyens émetteurs-récepteurs vers les premiers moyens émetteurs-récepteurs (1).

6. Système selon la revendication 5, caractérisé en ce que ledit circuit (5143) de traitement comporte :
- une porte logique de type OU recevant sur une première respectivement deuxième entrée le signal logique de détection délivré par la première respectivement deuxième voie de détection, et délivrant un signal logique de détection résultant,
- un circuit de type monostable recevant ledit signal logique de détection résultant la durée de l'état métastable dudit circuit monostable étant très supérieure à la durée de la période de ladite sousporteuse, ledit monostable permettant d'effectuer une recopie du signal de modulation de l'onde électromagnétique réfléchie pour engendrer le signal électromagnétique transmis par les deuxièmes (2) moyens émetteurs-récepteurs.

FIG_1

# FIG_2

FIG_3

512

516

5162

5161

GO

515

a)

b)

$\frac{\lambda}{4}$

(2k+1)

5161

5162

GO

E

**Office européen
des brevets**

# RAPPORT DE RECHERCHE
# EUROPEENNE

Numéro de la demande

**EP 90 40 3011**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | EP-A-0 308 964 (FUJITSU)<br>* Colonne 20, ligne 34 - colonne 21, ligne 37; figures 13-15 *<br>— — — | 1,2 | G 01<br>S 13/82<br>G 06 K 7/10 |
| Y | DE-A-3 347 044 (BROWN BOVERI)<br>* Pages 4,5; figure *<br>— — — | 1,2 | |
| A | US-A-2 589 843 (C.G. MONTGOMERY)<br>* En entier *<br>— — — | 3,4 | |
| A | US-A-3 798 641 (J. PRETI)<br>* En entier *<br>— — — | 1 | |
| D,A | FR-A-2 624 677 (S.F.I.M.)<br>* En entier *<br>— — — — — | 1 | |

| | DOMAINES TECHNIQUES RECHERCHES (Int. Cl.5) |
|---|---|
| | G 01 S<br>G 06 K |

Le présent rapport de recherche a été établi pour toutes les revendications

| Lieu de la recherche | Date d'achèvement de la recherche | Examinateur |
|---|---|---|
| La Haye | 30 janvier 91 | VAN WEEL E.J.G. |